# EUROPÄISCHE PATENTSCHRIFT

(11) **EP 3 800 146 B1**
(45) Veröffentlichungstag und Bekanntmachung des Hinweises auf die Patenterteilung: **21.09.2022**
(21) Anmeldenummer: 20180362.4
(22) Anmeldetag: 16.06.2020
(51) Int. Cl.: B65G 17/20, B65G 43/08

(54) **VORRICHTUNG UND VERFAHREN ZUM AUFGEBEN VON HÄNGEFÖRDERGUT IN EINE HÄNGEFÖRDERANLAGE SOWIE HÄNGEFÖRDERANLAGE MIT EINER DERARTIGEN VORRICHTUNG**
DEVICE AND METHOD FOR FEEDING SUSPENDED TRANSPORTED MATERIAL INTO AN OVERHEAD CONVEYOR SYSTEM AND OVERHEAD CONVEYOR SYSTEM WITH SUCH A DEVICE
DISPOSITIF ET PROCÉDÉ DE LIBÉRATION DE LA MARCHANDISE TRANSPORTÉE SUSPENDUE DANS UNE INSTALLATION DE TRANSPORT SUSPENDU AINSI QU'INSTALLATION DE TRANSPORT SUSPENDU DOTÉE D'UN TEL DISPOSITIF

(30) Priorität: 04.10.2019 DE 102019215304
(43) Veröffentlichungstag der Anmeldung: 07.04.2021
(73) Patentinhaber: Dürkopp Fördertechnik GmbH, 33719 Bielefeld (DE)
(72) Erfinder: Merten, Markus, 33605 Bielefeld (DE)
(74) Vertreter: Rau, Schneck & Hübner Patentanwälte Rechtsanwälte PartGmbB

(56) Entgegenhaltungen:
- EP-A1- 2 899 144
- EP-A2- 2 196 415
- DE-B3-102016 110 898

## Beschreibung

Die vorliegende Patentanmeldung nimmt die Priorität der deutschen Patentanmeldung DE 10 2019 215 304.6 in Anspruch.

Die Erfindung betrifft eine Vorrichtung und ein Verfahren zum Aufgeben von Hängefördergut in eine Hängeförderanlage sowie eine Hängeförderanlage mit einer derartigen Vorrichtung.

DE 10 2005 006 455 A1 offenbart eine Hängeförderanlage mit einer Fördertechnik zum Fördern von Hängefördergütern. Die Fördertechnik weist eine feste Mitnahme auf. Die Hängefördergüter werden mit einem festgelegten Transportabstand gefördert. Je kleiner der Transportabstand ist, desto größer ist die Leistung des Förderers je Zeiteinheit bei konstanter Fördergeschwindigkeit. Wenn der Transportabstand zu gering festgelegt ist und insbesondere kleiner ist als die Dicke des Hängeförderguts, können Störungen beim Betrieb der Hängeförderanlage auftreten, wenn Hängefördergüter aneinander anliegen. Wenn der Transportabstand zu groß gewählt wird, ist die Förderleistung der Hängeförderanlage reduziert. DE 10 2016 110 898 B3 offenbart eine Transportstation und ein Verfahren zum Transportieren von Fischen gemäß dem Oberbegriff von Anspruch 1. EP 2 899 144 A1 offenbart eine Fördervorrichtung und ein Verfahren zum automatisierten Fördern von Einzelwaren.

Es ist die Aufgabe der vorliegenden Erfindung, das Fördern von Hängefördergut in einer Hängeförderanlage zu verbessern, insbesondere eine störungsfreie Förderung mit größtmöglicher Leistungseffizienz zu gewährleisten.

Diese Aufgabe ist erfindungsgemäß gelöst durch eine Vorrichtung mit den im Anspruch 1 angegebenen Merkmalen, durch eine Hängeförderanlage mit den im Anspruch 4 angegebenen Merkmalen sowie durch ein Verfahren mit dem im Anspruch 10 angegebenen Merkmalen.

Erfindungsgemäß wurde erkannt, dass das Fördern von Hängefördergut in einer Hängeförderanlage verbessert ist, wenn die Hängefördergüter in eine Fördertechnik der Hängeförderanlage mit einem veränderlich festlegbaren Transportabstand abgegeben werden. Insbesondere wird der Transportabstand für jedes einzelne Hängefördergut individuell veränderlich festgelegt. Die individuelle Festlegung des Transportabstands erfolgt in Abhängigkeit von der jeweiligen Dicke der einzelnen Hängefördergüter. Die Dicke der Hängefördergüter erstreckt sich parallel zu der Förderrichtung entlang der Hängeförderanlage. Die jeweilige Dicke der Hängefördergüter wird mittels einer Erfassungseinheit erfasst. Durch das Aufgeben der Hängefördergüter mit dem veränderlich festgelegten Transportabstand ist das Risiko einer Störung beim Betrieb der Hängeförderanlage reduziert und insbesondere ausgeschlossen. Die Förderleistung der Hängeförderanlage kann optimal ausgenutzt werden. Zu groß gewählte Transportabstände zwischen Hängefördergütern, die lediglich eine geringe Dicke aufweisen, sind ausgeschlossen.

Ein Hängefördergut weist insbesondere eine Transporttasche auf, mit der eine oder mehrere Einzelwaren gefördert werden können. Eine derartige Transporttasche ist beispielsweise aus der EP 2 196 415 A2 bekannt, auf die hiermit verwiesen wird. Eine Transporttasche weist insbesondere zumindest teilweise eine flexible Seitenwand auf. Die Dicke der Transporttasche resultiert aus der Dicke der in der Transporttasche geförderten Einzelware. Die Dicke des Hängeförderguts ist a priori nicht bekannt.

Ein Hängefördergut kann auch einen Kleiderbügel aufweisen, an dem ein Kleidungsstück hängend gefördert wird. In Abhängigkeit der Dicke des Kleidungsstücks und/oder des Kleiderbügels variiert die Dicke des Hängeförderguts. Die Dicke des Kleidungsstücks kann in Abhängigkeit des Typs des Kleidungsstücks, der Größe und/oder bei Winter- bzw. Sommerware unterschiedlich sein.

Das Hängefördergut kann unmittelbar von der Fördertechnik der Hängeförderanlage gefördert werden. Der Transport des Hängeförderguts kann mittels eines Hängeadapters erfolgen, wie er aus der DE 10 2005 006 455 A1 bekannt ist, worauf mit verwiesen wird. Der Hängeadapter weist einen Mitnahmeabschnitt auf, der ein Mitnehmen in der Fördertechnik der Hängeförderanlage gewährleistet. Der Hängeadapter weist zudem eine Aufnahmeöffnung auf, in die eine Transporttasche oder ein Kleiderbügel eingehängt werden kann.

Die Vorrichtung umfasst eine Erfassungseinheit, die zum Erfassen der Dicke der einzelnen Hängefördergüter dient. Mittels der Erfassungseinheit wird insbesondere ein Erfassungsbereich definiert, indem mindestens ein Hängefördergut, insbesondere mehrere Hängefördergüter angeordnet sind. Der Erfassungsbereich ist insbesondere durch ein Lichtgitter gebildet, das entlang der Förderrichtung eine Lichtgitterlänge aufweist, die mindestens 100 mm, insbesondere mindestens 150 mm, insbesondere mindestens 200 mm und insbesondere genau 200 mm beträgt. Insbesondere beträgt die Lichtgitterlänge höchstens 400 mm, insbesondere höchstens 300 mm und insbesondere höchstens 200 mm.

Die Aufgabeeinheit umfasst insbesondere ein Vereinzelungselement, mit dem die Hängefördergüter vereinzelt in die Fördertechnik aufgegeben werden. Das Vereinzelungselement ist insbesondere stromabwärts des Erfassungsbereichs angeordnet. Das Vereinzelungselement ist insbesondere ein Stoppelement. Das Vereinzelungselement kann anstelle des Stoppelements auch als Förderschnecke mit einer Außengewindenut oder als Gewindespindel ausgeführt sein.

Das Stoppen und/oder vereinzelte Aufgeben der Hängefördergüter erfolgt insbesondere mittels des Vereinzelungselements. Wenn das Vereinzelungselement als Stoppelement ausgeführt ist, erfolgt das Stoppen, indem das Stoppelement eine weitere Förderung, insbesondere schwerkraftbedingt, der Hängefördergüter blockiert. Das vereinzelte Aufgeben der Hängefördergüter kann mittels des Stoppelements dadurch erfolgen, dass dies vorübergehend in eine Freigabeposition verlagert wird und eine Förderung eines oder mehrerer Hängefördergüter ermöglicht. Nachdem das oder die Hängefördergüter aufgegeben worden sind, kann das Stoppelement wieder in die Blockierposition verlagert werden. Insbesondere ist das vereinzelte Aufgeben der Hängefördergüter vereinfacht, wenn zusätzlich ein weiteres Stoppelement vorgesehen ist, das insbesondere stromabwärts des ersten Stoppelements angeordnet ist. Das zweite Stoppelement bleibt geschlossen, wenn das erste Stoppelement geöffnet ist, um eines oder mehrere Hängefördergüter aus dem Erfassungsbereich freizugeben. Das weitere Stoppelement bleibt solange in der Blockierposition, bis die aufzugebenden Hängefördergüter von dem ersten Stoppelement freigegeben worden sind. Danach wird das erste Stoppelement wieder in die Blockierposition verlagert. Anschließend kann das zweite Stoppelement in die Freigabeposition verlagert werden und die zwischen dem ersten und dem zweiten Stoppelement angeordneten Hängefördergüter in die Fördertechnik aufgeben. Insbesondere sind die beiden Stoppelemente entlang der Förderrichtung mit einem Mindestabstand zueinander angeordnet, der so groß ist, dass mindestens ein Hängefördergut, insbesondere ein Hängefördergutadapter zwischen den Stoppelementen angeordnet sein kann. Insbesondere ist der Mindestabstand derart festgelegt, dass mindestens zwei Hängefördergüter, insbesondere mindestens drei Hängefördergüter, insbesondere mindestens vier Hängefördergüter und insbesondere bis zu acht Hängefördergüter zwischen den beiden Stoppelementen angeordnet sein können.

Entsprechend erfolgt ein Stoppen der Hängefördergüter mittels einer Schnecke oder Spindel, indem die Spindel oder Schnecke angehalten, also nicht rotiert wird. Ein Aufgeben der Hängefördergüter erfolgt durch Rotation der Schnecke oder der Spindel.

Zum Erfassen der Dicke der einzelnen Hängefördergüter wird insbesondere die Anzahl der Hängefördergüter in dem Erfassungsbereich ermittelt, insbesondere die Anzahl der Hängefördergüter in dem Erfassungsbereich gezählt. Die Anzahl der Hängefördergüter in dem Erfassungsbereich beträgt zwischen 0 Stück und 8 Stück oder mehr. Je nach Dicke der Hängefördergüter können mehr oder weniger Hängefördergüter in dem Erfassungsbereich angeordnet sein. Das Zählen der Hängefördergüter erfolgt insbesondere durch Zählen der Anzahl der Hängeadapter, mittels derer jeweils ein Hängefördergut in der Hängeförderanlage transportiert wird.

Aus der definierten Länge des Erfassungsbereichs und der Anzahl der darin angeordneten Hängefördergüter, insbesondere der Anzahl der darin angeordneten Hängeadapter, kann eine durchschnittliche Taschendicke der in dem Erfassungsbereich angeordneten Hängefördergüter berechnet werden. Insbesondere wird ein durchschnittlicher Taschenabstand auf Basis der berechneten, durchschnittlichen Taschendicke für die Gruppe der Hängefördergüter in dem Erfassungsbereich festgelegt. Anschließend können einzelne Hängefördergüter und/oder Gruppen mit mehreren Hängefördergütern in die Fördertechnik der Hängeförderanlage aufgegeben werden. Als vereinzeltes Aufgeben von Hängefördergütern ist auch zu verstehen, dass eine Gruppe von Hängefördergütern unmittelbar nacheinander in die Fördertechnik der Hängeförderanlage aufgegeben wird.

Insbesondere wird das Zählen der Anzahl der Hängefördergüter, insbesondere der Hängeförderadapter, zyklisch und insbesondere kontinuierlich wiederholt, insbesondere sobald ein Hängefördergut und/oder eine Gruppe von Hängefördergütern aus dem Erfassungsbereich in die Fördertechnik der Hängeförderanlage aufgegeben worden ist. Entsprechend kann sich eine veränderte durchschnittliche Taschendicke ergeben und ein neuer, von dem vorherigen durchschnittlichen Taschenabstand abweichender durchschnittlicher Taschenabstand festgelegt werden, mit dem dann wieder ein Hängefördergut und/oder eine Gruppe von Hängefördergütern in die Fördertechnik aufgegeben werden kann.

Der Erfassungsbereich ist insbesondere entlang der Hängeförderanlage, insbesondere an einer Staustrecke mit einer Förderschiene angeordnet. Die Förderschiene ist mit einem von 0° verschiedenen Neigungswinkel gegenüber der Horizontalen geneigt angeordnet angeordnet. Der Neigungswinkel beträgt insbesondere zwischen 1° und 10°. Die Hängefördergüter werden entlang der geneigten Förderschiene schwerkraftbedingt zu dem Vereinzelungselement hingefördert. Zusätzlich oder alternativ kann die Förderschiene einen Förderantrieb aufweisen, um die Hängeförderguter aktiv zu fördern. Insbesondere ist ein sogenannter Stauförderer mit Mitnehmern vorgesehen. Bezüglich Details des Aufbaus und der Funktion des Stauförderers wird auf DE 10 2010 010 107 A1 explizit verwiesen.

Eine Auswerteeinheit zum veränderlichen Festlegen des Transportabstandes für das aufzugebene Hängefördergut in Abhängigkeit der ermittelten Dicke vereinfacht das veränderliche Festlegen des Transportabstandes. Die Auswerteeinheit steht insbesondere mit der Erfassungseinheit in Signalverbindung. In Abhängigkeit der ermittelten Dicke wird mittels der Auswerteeinheit der Transportabstand festgelegt. Dazu kann in der Auswerteeinheit eine Auswertetabelle hinterlegt sein. In der Auswertetabelle ist insbesondere für eine vorgegebenen Fördergeschwindigkeit der Fördertechnik verschiedenen Dicken jeweils ein Transportabstand zugeordnet. Insbesondere sind mehrere Auswertetabellen jeweils für unterschiedliche Fördergeschwindigkeiten in der Auswerteeinheit hinterlegt. Insbesondere sind Grö-ßenintervalle für die Dicke definiert, denen jeweils ein bestimmter Transportabstand zugeordnet ist. Wenn die Dicke des Hängeförderguts einem in der Auswertetabelle hinterlegten Wert entspricht, wird der zugehörige Transportabstand unmittelbar bestimmt. Wenn die ermittelte Dicke zwischen zwei in der Auswertetabelle hinterlegten Dickenwerten liegt, kann der entsprechende Transportabstand durch lineare Interpolation der Tabellenwerte ermittelt werden. Dazu kann die Auswerteeinheit eine insbesondere integriert ausgeführte Recheneinheit aufweisen. Alternativ kann der Transportabstand auch der nächstgrößeren Dicke, die in der Auswertetabelle hinterlegt ist, zugeordnet werden. Insbesondere steht die Auswerteeinheit mit der Aufgabeeinheit und insbesondere mit dem Stoppelement in Signalverbindung

Eine Erfassungseinheit mit einem Sensor gemäß Anspruch 2 ermöglicht eine unmittelbare, insbesondere berührungslose Erfassung der Dicke der Hängefördergüter. Die Erfassungseinheit ist eine Messeinheit. Insbesondere ist der Sensor ein optischer Sensor und insbesondere ein Lichtgitter. Zusätzlich oder alternativ kann die Messeinheit ein Bildverarbeitungssystem, insbesondere eine Kamera, aufweisen, um die Dicke der Hängefördergüter berührungslos zu messen.

Zusätzlich oder alternativ kann die Erfassungseinheit eine Leseeinheit aufweisen. Die Leseeinheit ist geeignet, mit einem Datenträger, insbesondere berührungslos, zu kommunizieren. In dem Datenträger sind die Einzelware charakterisierende Daten, insbesondere die Dicke des Hängeförderguts, hinterlegt. Der Datenträger ist insbesondere ein RFID-Chip, der mittels der Leseeinheit in Form eines Transponderlesers, insbesondere im Vorbeifahren der Hängefördergüter, ausgelesen werden kann. Insbesondere ist es nicht erforderlich, den Transport der Hängefördergüter für das Auslesen der Daten von dem Datenträger zu stoppen. Die Daten auf dem Datenträger können beispielsweise von einer zentralen Steuerungseinheit, einem sogenannten Lagerverwaltungssystem an den Datenträger übermittelt worden sein. Alternativ können die Daten vorab an einer zentralen Messstation einer Hängeförderanlage erfasst und dem Datenträger zugeordnet worden sein.

Alternativ ist es auch möglich, dass die das Hängefördergut charakterisierenden Daten nicht unmittelbar auf dem Datenträger gespeichert sind, sondern über ein Identifikationsmittel wie beispielsweise ein Barcode, ein QR-Code und/oder eine eindeutige Teilenummer des Hängeadapters oder eines Kleiderbügels eine Identifikation des Hängeförderguts erfolgt und die jeweilige Dicke des Hängeförderguts in der zentralen Steuerungseinheit hinterlegt ist. Es ist dann mittels der zentralen Steuerungseinheit möglich, die Dicke des Hängeförderguts eindeutig zuzuordnen.

Der Vorteil einer Leseeinheit besteht darin, dass eine Messeinheit entbehrlich ist. Ein echtes Messen und insbesondere die damit verbundenen Genauigkeitsabweichungen werden vermieden.

Eine Vorrichtung gemäß Anspruch 3 ermöglicht eine variable veränderliche Festlegung des Transportabstands. Eine stufenlose Festlegung des Transportabstands ermöglicht insbesondere eine maximale Flexibilität beim Aufgeben der Hängefördergüter. Insbesondere kann der Transportabstand durch Multiplikation der erfassten Dicke mit einem einstellbaren Faktor, dem sogenannten Expansionsfaktor, ermittelt werden. Der Expansionsfaktor ist größer als 1, insbesondere mindestens 1,5, insbesondere mindestens 2, insbesondere mindestens 3, insbesondere mindestens 3,5, insbesondere mindestens 4 und insbesondere mindestens 5. Eine stufenweise Festlegung des Transportabstands ist unkompliziert durchführbar.

Vorteilhaft ist es, wenn der Transportabstand einen einstellbaren Mindesttransportabstand nicht unterschreitet, insbesondere unabhängig von der ermittelten Dicke des Hängeförderguts. Der Mindesttransportabstand wird insbesondere durch die Fördertechnik vorgegeben.

Eine Hängeförderanlage gemäß Anspruch 4 weist im Wesentlichen die Vorteile der Vorrichtung gemäß den vorherigen Ansprüchen auf, worauf hiermit verwiesen wird. Die Vorrichtung ist fördertechnisch mit einer Fördertechnik verbunden, die zum Mitnehmen der aufgegebenen Hängefördergüter dient. Die Förderung der Hängefördergüter der Hängeförderanlage ist störungsfrei und mit größtmöglicher Förderleistung gewährleistet. Die Hängeförderanlage ist insbesondere eine Taschenförderanlage.

Insbesondere kann eine Speicherkapazität einer Hängeförderanlage mit einem Warenspeicher optimal ausgenutzt werden. Bei einer Hängeförderanlage mit einer Sortiereinheit können beim vereinzelten Aufgeben der Hängefördergüter neben der Dicke zusätzliche Parameter bei der Festlegung des Transportabstands berücksichtigt werden wie beispielsweise die Schaltzyklen von Steuerelementen in der Sortiereinheit und/oder der Platzbedarf des Hängeförderguts in einer bogenförmigen Förderschiene beim Ausschleusen des Hängeförderguts.

Eine Hängeförderanlage gemäß Anspruch 5 gewährleistet eine zuverlässige und robuste Förderung der Hängefördergüter. Als Fördermittel der Fördertechnik dient insbesondere eine Förderkette, die insbesondere umlaufend ausgeführt ist. An der Förderkette sind Mitnehmer befestigt, die zum Mitnehmen der Hängefördergüter dienen.

Eine Hängeförderanlage gemäß Anspruch 6 ermöglicht eine definierte Mitnahme der Hängefördergüter.

Ein Mitnahmeabstand gemäß Anspruch 7 ermöglicht eine besonders effiziente Umsetzung der Erfindung. Je kleiner der Mitnahmeabstand gewählt ist, desto größer ist die Auflösung für den Transportabstand. Je größer die Auflösung für den Transportabstand ist, desto genauer kann der Transportabstand festgelegt werden. Eine genaue Festlegung des Transportabstands bewirkt eine Optimierung der Hängeförderanlage hinsichtlich eines für die Förderleistung kleinstmöglichen Transportabstands einerseits und hinsichtlich des für den störungsfreien Betrieb größtmöglichen Transportabstands andererseits. Insbesondere ist der Mitnahmeabstand deutlich kleiner als die maximale Dicke eines Hängeförderguts in der Hängeförderanlage. Als maximale Dicke wird der Wert verstanden, den eine Dicke für sämtliche Fördergüter annehmen kann. Die maximale Dicke ist insbesondere durch die zu fördernden Einzelwaren und/oder die dafür verwendete Transporttasche festgelegt. Insbesondere beträgt die maximale Dicke der Hängefördergüter mehr als 200 mm, insbesondere mindestens 220 mm, insbesondere mindestens 240 mm, insbesondere mindestens 250 mm und insbesondere höchstens 300 mm.

Ein Warenspeicher gemäß Anspruch 8 ermöglicht eine Speicherung, insbesondere eine Zwischenspeicherung, der Hängefördergüter in der Hängeförderanlage.

Eine Sortiereinheit gemäß Anspruch 9 ermöglicht ein Sortieren der Hängefördergüter in der Hängeförderanlage.

Das Verfahren gemäß Anspruch 10 weist im Wesentlichen die Vorteile der Vorrichtung und der Hängeförderanlage auf, worauf hiermit verwiesen wird. Wesentlich ist, dass die Dicke der einzelnen Hängefördergüter erfasst und der Transportabstand, mit dem die Hängefördergüter in die Fördertechnik der Hängeförderanlage aufgegeben werden, veränderlich festgelegt werden.

Ein veränderliches Festlegen des Transportabstandes für das aufzugebende Hängefördergut in Abhängigkeit der ermittelten Dicke mittels einer Auswerteeinheit gewährleistet das störungsfreie Fördern der Hängefördergüter mit größtmöglicher Förderleistung.

Ein Verfahren gemäß Anspruch 11 gewährleistet ein besonders unkompliziertes Aufgeben der Hängefördergüter. Dies kann insbesondere durch, insbesondere gesteuertes, Freigeben des Stoppelements erfolgen.

Sowohl die in den Patentansprüchen angegebenen Merkmale als auch die in der nachfolgenden Ausführungsform der erfindungsgemäßen Vorrichtung angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Zusätzliche Merkmale, vorteilhafte Ausgestaltungen und Einzelheiten der Erfindung ergeben sich der nachfolgenden Beschreibung eines Ausführungsbeispiels anhand der Zeichnung. Es zeigen:
- Fig. 1: eine schematische Darstellung einer Hängeförderanlage,
- Fig. 2: eine schematische Seitenansicht einer erfindungsgemäßen Vorrichtung,
- Fig. 3: eine teilgeschnittene Seitenansicht einer Fördertechnik der Hängeförderanlage.

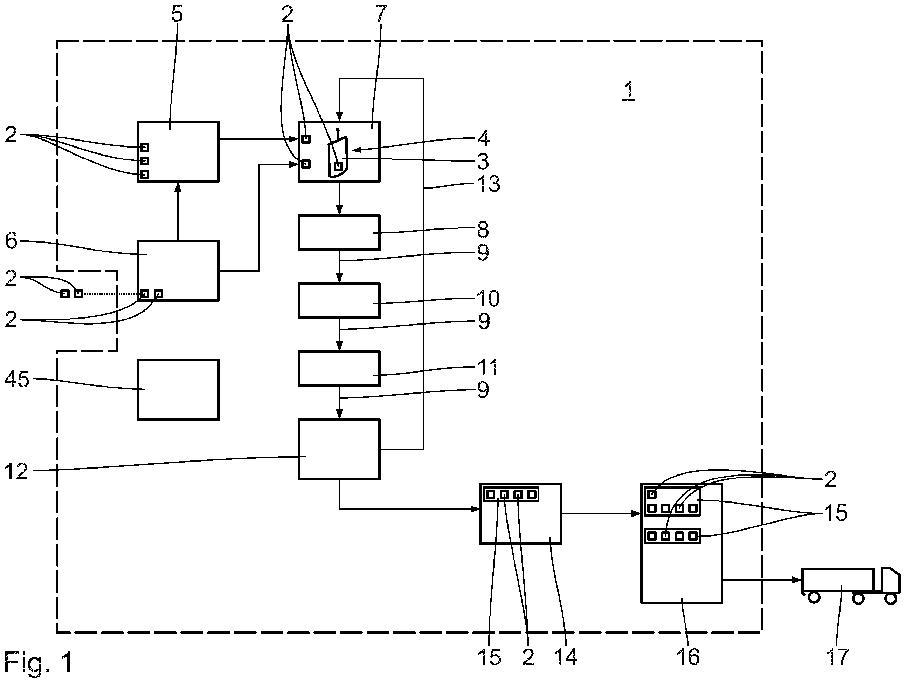

Eine in Fig. 1 als Ganzes mit 1 gekennzeichnete Hängeförderanlage dient zum Fördern und/oder Transportieren von Einzelwaren 2. Die Einzelwaren 2 werden in der Hängeförderanlage 1, insbesondere vereinzelt, in Transporttaschen 3 hängend gefördert. Die mit einer Einzelware 2 bestückte Transporttasche 3 bildet ein Hängefördergut 4. Die Einzelwaren 2 sind beispielsweise in Tüten verpackte Kleidungsstücke oder in anderen Transportbehältnissen, insbesondere Kartons, verpackte Waren aus dem Bereich des Online-Handels, dem sogenannten E-Commerce.

Das Hängefördergut 4 kann alternativ auch als Transportmittel einen Kleiderbügel umfassen, an dem ein Kleidungsstück hängend gefördert wird.

Die Hängeförderanlage 1 umfasst ein Warenlager 5, in dem die Einzelwaren 2 eingelagert sind. Das Warenlager 5 kann als manuelles Lager oder als automatisches Lager ausgeführt sein. Die Hängeförderanlage 1 weist ferner einen Wareneingang 6 auf, über den die Einzelwaren 2 der Hängeförderanlage 1, insbesondere von extern, zugeführt werden. Dem Wareneingang 6 können auch Retourenwaren zugeführt werden.

Der Wareneingang 6 ist fördertechnisch mit dem Warenlager 5 verbunden. Die fördertechnische Verbindung ist beispielsweise ein Förderband oder eine manuelle Zubringung der Einzelwaren 2, die insbesondere auch in Gebinden im Wareneingang 6 vorliegen können, zu dem Warenlager 5.

Die Hängeförderanlage 1 umfasst ferner mindestens eine Beladestation 7, an der die Einzelwaren 2 in die Transporttasche 3 geladen werden. Die Beladestation 7 ist sowohl mit dem Warenlager 5 als auch mit dem Wareneingang 6 jeweils unabhängig fördertechnisch verbunden. Mittels der fördertechnischen Verbindung können die Einzelwaren 2 aus dem Warenlager 5 und/oder aus dem Wareneingang 6 zur Beladestation 7 gefördert werden. Die Einzelwaren können von dem Warenlager 5 und/oder dem Wareneingang 6 auch manuell zur Beladestation 7, insbesondere mittels eines Federbogenwagens oder eines Palettengutwagens gefördert werden.

Die Hängeförderanlage 1 umfasst eine Vorrichtung 8 zum Aufgeben von Hängefördergut 4 in die Hängeförderanlage 1. Die Hängeförderanlage 1 umfasst eine Fördertechnik 9 zum Mitnehmen der aufgegebenen Hängefördergüter 4. Die Vorrichtung 8 ist mit Fördertechnik 9 fördertechnisch verbunden.

Die Hängeförderanlage 1 umfasst einen Warenspeicher 10 zum Speichern, insbesondere zum Zwischenspeichern der Hängefördergüter 4 in der Hängeförderanlage 1.

Die Hängeförderanlage 1 weist ferner eine Sortiereinheit 11 auf, die zum Sortieren der Hängefördergüter 4, also zum Verändern der Reihenfolge der Hängefördergüter 4 im Warenstrom, dient. Die Sortiereinheit 11 kann mehrere parallel und/oder in Reihe angeordnete Staustrecken und/oder einen oder mehrere Umlaufkreisel aufweisen. Zusätzlich oder alternativ kann die Sortiereinheit 11 als Matrixsorter ausgeführt sein.

Die Hängeförderanlage 1 weist mindestens eine Entladestation 12 auf. Je Sortiereinheit 11 können mehrere, insbesondere drei oder fünf, Entladestationen 12 vorgesehen sein. Insbesondere kann jede an die Sortiereinheit 11 angeschlossene Entladestation 12 von jedem Umlaufkreisel der Sortiereinheit 11 erreicht werden. In der Entladestation 12 werden die mit jeweils einer Einzelware 2 beladenen Transporttaschen 3, insbesondere automatisiert, geöffnet und entladen.

Die in der Entladestation 12 entleerten Transporttaschen 3 werden über eine Rückführstrecke 13 in der Hängeförderanlage 1 zurückgeführt und insbesondere der Beladestation 7 als Leertaschen zum erneuten Beladen mit Einzelwaren 2 zur Verfügung gestellt. Die entleeren Transporttaschen 3 können auch in einem nicht dargestellten Leertaschen-Speicher zwischengespeichert werden.

Die Entladestation 12 ist fördertechnisch mit mindestens einer Packstation 14 verbunden. An der Packstation werden die Einzelwaren 2 zu einem versandfertigen Auftrag 15 gepackt. Die Packstation 14 ist mit einem Warenausgang 16 fördertechnisch verbunden. Über den Warenausgang 16 können die Aufträge 15 mit den Einzelwaren 2 die Hängeförderanlage 1 verlassen. Aufträge 15 aus dem Warenausgang 16 können mittels externer Transportmittel 17, insbesondere Transportfahrzeuge, insbesondere Lastkraftwagen, abtransportiert werden.

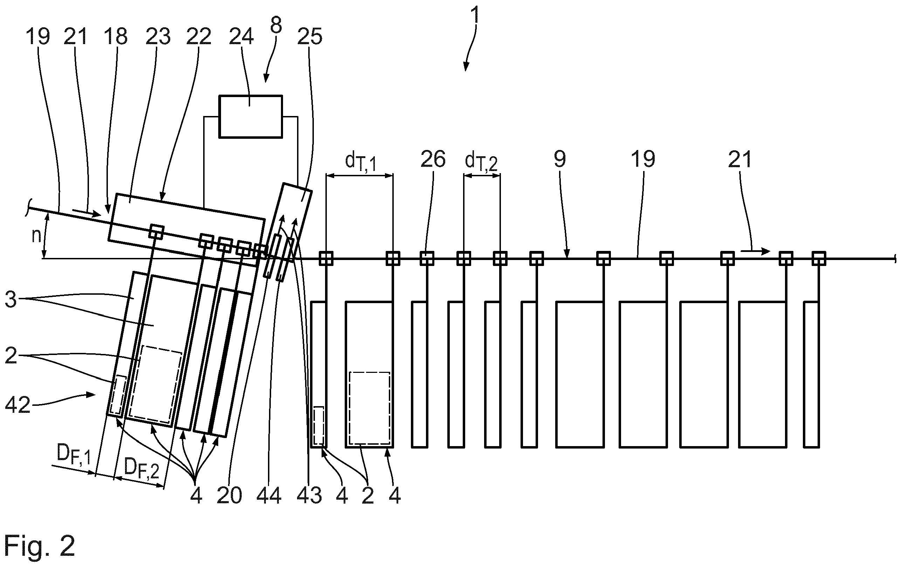

Nachfolgend wird anhand der Fig. 2 die Vorrichtung 8 näher erläutert.

Die Vorrichtung 8 umfasst eine Staustrecke 18 mit einer Förderschiene 19, die ein Aufstauen der Hängefördergüter 4 im Bereich der Staustrecke 18 gewährleistet. Die Förderschiene 19 ist mit einem Neigungswinkel n gegenüber der Horizontalen geneigt angeordnet. Der Neigungswinkel n beträgt vorteilhafterweise weniger als 15°, insbesondere zwischen 1° und 12° und insbesondere zwischen 1° und 10°. Die Hängefördergüter 4 werden entlang der geneigten Förderschiene 19 schwerkraftbedingt, also selbsttätig, gefördert. Zusätzlich oder alternativ kann die Förderschiene 19 auch einen Förderantrieb aufweisen, um die Hängefördergüter 4 zu fördern.

Ein Aufstauen der Hängefördergüter 4 an der Staustrecke 18 ist durch ein erstes Stoppelement 20 gewährleistet. Das erste Stoppelement 20 ist an einem stromabwärts gelegenen Ende der Förderschiene 19 angeordnet. Das erste Stoppelement 20 ist insbesondere quer und insbesondere senkrecht zur Förderrichtung 21, die durch die Förderschiene 19 vorgegeben wird, orientiert. Das erste Stoppelement 20 ist entlang einer Richtung quer und insbesondere senkrecht zur Förderrichtung 21 verlagerbar angeordnet. In der in Fig. 2 gezeigten Anordnung ist das erste Stoppelement 20 in einer Stoppanordnung.

Im Bereich der Staustrecke 18 ist eine Erfassungseinheit 22 angeordnet. Die Erfassungseinheit 22 dient zum Erfassen der jeweiligen Dicke D_{F} der einzelnen Hängefördergüter 4. Wie in Fig. 2 exemplarisch dargestellt, weist ein Hängefördergut 4 mit einer dünnen Einzelware 2 eine erste Dicke D_{F,1} auf, die kleiner ist als die Dicke D_{F,2} eines zweiten Hängeförderguts 4 mit einer dicken Einzelware 2. Die Erfassungseinheit 22 kann einen Sensor aufweisen, der als optischer Sensor und insbesondere als Lichtgitter ausgeführt sein kann. Die Erfassungseinheit 22 ist dann eine Messeinheit. Die Erfassungseinheit 22 kann auch eine Leseeinheit aufweisen.

Die Erfassungseinheit 22 steht in Signalverbindung mit einer Auswerteeinheit 24. Die Auswerteeinheit 24 dient zum veränderlichen Festlegen des Transportabstands d_{T} für das aufzugebende Hängefördergut 4 in Abhängigkeit der ermittelten Dicke D_{F}. Die Auswerteeinheit 24 steht in Signalverbindung mit einer Aufgabeeinheit 25. Die Aufgabeeinheit 25 dient zum vereinzelten Aufgeben der Hängefördergüter 4 in die Fördertechnik 9 der Hängeförderanlage 1 mit einem veränderlich festlegbaren Transportabstand d_{T}.

Das erste Stoppelement 20 ist insbesondere Bestandteil der Aufgabeeinheit 25.

Die Aufgabeeinheit 25 weist ein zweites Stoppelement 44 auf, das im Wesentlichen identisch zu dem ersten Stoppelement 20 ausgebildet ist. Das zweite Stoppelement 44 ist bezüglich der Förderrichtung 21 stromabwärts bezüglich des ersten Stoppelements 20 angeordnet. Das zweite Stoppelement 44 dient zum vereinzelten Aufgeben der Hängefördergüter 4 in die Fördertechnik 9.

Die Hängeförderanlage 1 umfasst ein Schienensystem mit Förderschienen 19 wie in der Staustrecke 18. Die Förderschienen 19 sind entlang der Förderrichtung 21 hintereinander angeordnet und miteinander verbunden. Entlang der Förderschienen 19 des Schienensystems werden die Hängefördergüter 4 an Hängeadaptern 26 hängend gefördert. Die Hängeadapter 26 sind in Fig. 2 rein schematisch dargestellt.

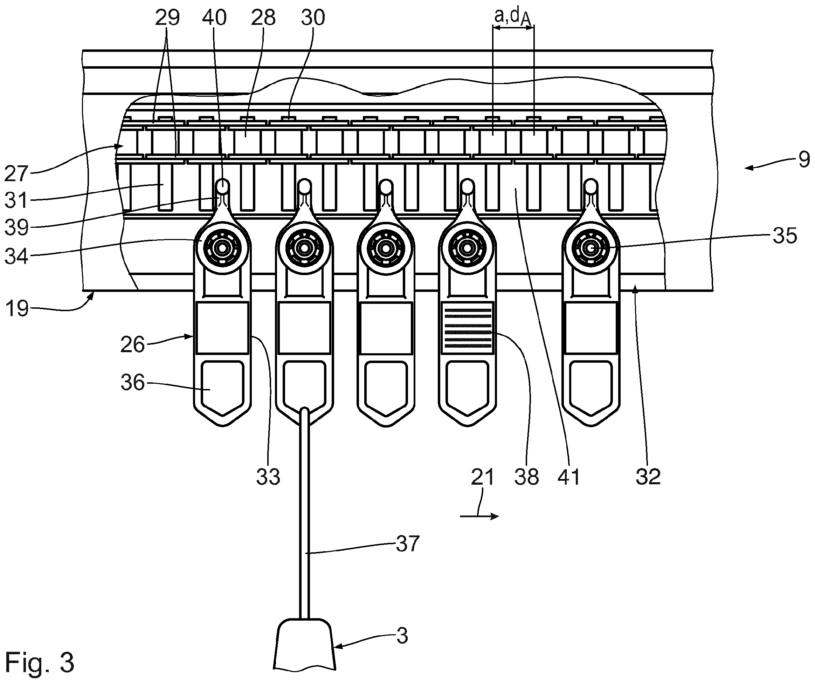

Nachfolgend wird anhand der Fig. 3 die Fördertechnik 9 näher erläutert.

Die Fördertechnik 9 der Hängeförderanlange 1 weist die Förderschiene 19 auf, die mittels einer geeigneten Trageinrichtung in einem Raum verlegbar ist. In der als Hohlkasten-Profil ausgebildeten Förderschiene 19 ist ein Fördermittel 27 in Form einer Förderkette angeordnet, das mittels nicht dargestellter Antriebsmittel entlang der Förderrichtung 21 antreibbar ist. Weiterhin sind die Hängeadapter 26 dargestellt, die mittels des Fördermittels 27 in der Förderschiene 19 bewegbar sind.

Bei der Förderkette handelt es sich um eine sogenannte Rollenkette, die Rollen 28 aufweist, die in einem Rollenabstand a voneinander mittels Verbindungslaschen 29 und Bolzen 30 schwenkbar miteinander verbunden sind. Die Bolzen 30 weisen nach unten vorstehende, als Mitnehmer 31 dienende bolzenförmige Verlängerungen auf. Die Bolzen 30 mit den Mitnehmern 31 verlaufen senkrecht zur Förderschiene 19 in einer durch die Förderrichtung 21 aufgespannten Vertikalebene.

Ein Mittenabstand benachbarter Mitnehmer 31 in der Förderschiene 19 in Förderrichtung 21 entspricht exakt der Teilung der Förderkette 27, also dem Rollenabstand a, und ist insoweit unveränderbar und konstant. Der Mittenabstand benachbarter Mitnehmer 31 entspricht einem regelmäßigen Mitnehmerabstand d_{A}. An Ihrer Unterseite weist die Förderschiene 19 einen sich in Förderrichtung 21 erstreckenden Längsschlitz 32 auf. Durch den Schlitz 32 ragt ein flaches Tragteil 33 jedes Hängesadapters 26 nach unten aus der Förderschiene 19 heraus. In seinem oberen Bereich weist der Hängeadapter 26 beiderseits des Tragteils 33 je eine Laufrolle 34 auf, die sich jeweils auf einem nicht näher dargestellten Führungssteg der Förderschiene abstützen und hierauf in Förderrichtung 21 verschiebbar sind. Es ist also nur ein paar von gemeinsamen Laufrollen 34 vorhanden, die um eine gemeinsame Achse 35 drehbar sind. Der gesamte Hängeadapter 26 kann in der Förderschiene 19 um die Achse 35 pendeln.

Das Tragteil 33 weist an seinem unteren Ende eine Aufnahmeöffnung 36 auf, in die ein Haken 37 der Transporttasche 3 einhängbar ist. In die Aufnahmeöffnung kann auch ein Haken eines Kleiderbügels eingehängt werden.

Zwischen der Aufnahmeöffnung 36 und der Unterseite der Förderschiene 19 ist ein Identifizierungselement 38 an dem Hängeadapter 26 angeordnet, bei dem es sich um einen Transponder, einen Strichcode oder einen QR-Code handeln kann. Das Identifizierungsgerät 38 verläuft entsprechend der Anordnung des plattenartigen Tragteils 33 in Förderrichtung 21, liegt also mit seiner Hauptfläche offen quer zur Förderrichtung 21, also zur Seite hin. Es ist damit also mittels eines Identifizierungsgeräts, wie beispielsweise einen Strichcodeleser oder einen Transponderleser eindeutig erfassbar.

Oberhalb der Laufrollen 34 erstreckt sich ein stilartiger Ansatz 39 des Hängeadapters 26, der einstückig mit dem Tragteil 33 an dessen oberen Ende ausgebildet ist. Am oberen Ende des Ansatzes 39 ist ein Anschlag 40 in Form eines Querriegels ausgebildet. Der Ansatz 39 und der Anschlag 40 haben die Grundform eines Hammers. Mit dem Ansatz 39 und dem Anschlag 40 ist der Hängeadapter 26 in einem zwischen zwei benachbarten Mitnehmern 31 gebildeten Zwischenraum 41 angeordnet. Bei einer Förderbewegung der Förderkette entlang der Förderrichtung 21 werden die Hängeadapter jeweils von dem in Förderrichtung 21 nachlaufenden Mitnehmer 31 mitgenommen, also transportiert. Die Fördertechnik weist eine feste Mitnahme auf.

Vorteilhaft ist es, wenn die Einzelwaren 2 jeweils eine Einzelwaren-Identifikationseinrichtung aufweisen, über die die Einzelwaren 2 eindeutig identifizierbar sind. Bei Kleidungsstücken kann dies beispielsweise anhand des Herstellers, des Artikels, der Größe und/oder der Farbe erfolgen. Die Identifikationsdaten der Einzelwaren 2 können mit den im Identifikationselement 38 eines Hängeadapters 26 gespeicherten Daten an eine zentrale Steuerungseinheit 45 signaltechnisch übermittelt und datentechnisch miteinander verknüpft werden. Die Einzelwaren 2 können während ihres Transports in der Hängeförderanlage 1 über entsprechend angeordnete Lesegeräte entlang der Hängeförderanlage 1, die insbesondere die Position der Transporttaschen 3 erfassen, eindeutig zugeordnet werden. Dadurch ist eine vereinzelte, gezielte Förderung der Einzelwaren 2 entlang der Hängeförderanlage möglich.

Bezüglich konstruktiver Details und weiterer Einzelheiten der Fördertechnik 9, insbesondere der Förderschiene 19, des Fördermittels 27 und der Hängeadapter 26, wird ausdrücklich auf die DE 10 2005 006 455 A1 verwiesen.

Nachfolgend wird anhand der Fig. 1 bis 3 ein Verfahren zum Betrieb der Hängeförderanlage 1 und insbesondere ein Verfahren zum Aufgeben der Hängefördergüter 4 in die Hängeförderanlage 1 näher erläutert.

Einzelwaren 2 werden dem Wareneingang 6 zugeführt. Von dem Wareneingang 6 gelangen die Einzelwaren 2 entweder direkt oder über das Warenlager 5 zu der Beladestation 7, wo jeweils eine Transporttasche 3 mit einer Einzelware 2 beladen wird. Die mit Einzelwaren 2 beladenen Transporttaschen 3, also die Hängefördergüter 4, werden von der Beladestation 7 zu der Vorrichtung 8 gefördert und an der Staustrecke 18 gestaut. Die an der Staustrecke gestaut angeordneten Hängefördergüter bilden eine Stichprobe 42 von Hängefördergütern 4. Mittels der Erfassungseinheit 22 werden die einzelnen Dicken D_{F} der Hängefördergüter 4 erfasst und an die Auswerteeinheit 24 übermittelt. In der Auswerteeinheit 24 wird in Abhängigkeit der jeweils ermittelten Dicke D_{F} ein Transportabstand d_{T} festgelegt, mit dem die Hängefördergüter 4 in die Fördertechnik 9 der Hängeförderanlage 1 aufgegeben werden.

Das Aufgeben der Hängefördergüter 4 in die Fördertechnik 9, erfolgt dadurch, dass das erste Stoppelement 20 von der in Fig. 2 gezeigten Stoppanordnung in eine Freigabeanordnung verlagert wird. Dazu ist das erste Stoppelement 20 mittels der Aufgabeeinheit 25 entlang der Betätigungsrichtung 43 betätigbar und aufgrund der Neigung der Staustrecke 19 rutscht das Fördergut 4, das benachbart zu dem ersten Stoppelement 20 angeordnet ist, daran vorbei in die Aufgabeeinheit 25. Alternativ oder zusätzlich kann an der Staustrecke 19 ein Antrieb vorgesehen sein, um das Hängefördergut 4 von der Staustrecke 19 in die Aufgabeeinheit zu fördern. Das Hängefördergut 4 ist in der Aufgabeeinheit 25 mittels des zweiten Stoppelements 44 gehalten. Anschließend wird das erste Stoppelement 20 wieder in die Stoppanordnung verlagert. Dadurch ist verhindert, dass weitere Hängefördergüter 4 in die Aufgabeeinheit 25 gelangen können. In der Aufgabeeinheit 25 ist insbesondere nur ein einziges, das in die Fördertechnik 9 aufzugebende Hängefördergut 4 angeordnet. Nach einem definierten Zeitintervall Δt öffnet das zweite Stoppelement 44 und gibt das Hängefördergut 4 vereinzelt in die Fördertechnik 9 auf und wird von einem der Mitnehmer 31 mitgenommen.

Die Aufgabeeinheit 25 könnte auch eine drehbare Spindel mit einem Schneckengang aufweisen, wobei sich in jedem Schneckengang immer nur ein Hängefördergut 4 befindet. Durch die Drehung der Spindel werden die Hängefördergüter 4 vereinzelt auf die Fördertechnik 9 aufgegeben.

In Abhängigkeit des Zeitintervalls Δt und der Geschwindigkeit des Fördermittels 27 in der Fördertechnik 9 resultiert der jeweilige Transportabstand d_{T} wie in Fig. 2 dargestellt, weisen die Hängefördergüter 4 in Abhängigkeit der geförderten Einzelware 2 unterschiedliche Dicken D_{F,1}, D_{F,2} auf. Entsprechend werden unterschiedliche Transportabstände d_{T,1}, d_{T,2} festgelegt. Der jeweilige Transportabstand eines Hängeförderguts orientiert sich dabei an der Dicke D_{F} des vorherigen Hängeförderguts 4. Je größer die Dicke D_{F} des vorherigen Hängeförderguts 4 ist, desto größer ist der Transportabstand d_{T} des nacheilenden Hängeförderguts 4. Insbesondere gilt: d_{T} > D_{F}, insbesondere d_{T} > 1,05 · D_{F}, insbesondere d_{T} > 1,1 · D_{F}, insbesondere d_{T} > 1,2 · D_{F}, insbesondere d_{T} > 1,25 · D_{F}.

Die Hängefördergüter 4 werden entlang der Fördertechnik 9 mit einem optimalen Transportabstand d_{T} gefördert. Der jeweilige Transportabstand d_{T} zwischen zwei benachbarten Hängefördergütern 4 ist individuell an deren Breite D_{F} angepasst. Der jeweilige Transportabstand d_{T} ist so festgelegt, dass eine Kollision benachbarter Hängefördergüter 4 und damit eine Störung der Hängeförderanlage 1 vermieden ist. Der Transportabstand d_{T} ist aber auch klein genug, um eine größtmögliche Ausnutzung der Förderleistung der Hängeförderanlage 1 zu gewährleisten.

Vorteilhaft ist es, wenn die Erfassungseinheit 22 die jeweiligen Dicken D_{F,i} sämtlicher Hängefördergüter 4 in der Staustrecke 18 erfasst, an die Auswerteeinheit 24 übermittelt und von dort die Aufgabeeinheit 25 entsprechend angesteuert wird. Die Auswerteeinheit 24 ist insbesondere als speicherprogrammierbare Steuerung ausgeführt und ermöglicht eine Bewertung von der Erfassungseinheit 22 übermittelten Werte der Dicken D_{F,i}. Vorteilhaft ist es, bei der Festlegung der Transportabstände historische Daten zu berücksichtigen, insbesondere gemessene Dicken D_{F} und dafür festgelegte Transportabstände d_{T} mit aktuell erfassten, insbesondere gemessenen, Dicken D_{F} zu kombinieren. Die historischen Daten umfassen die erfassten Dicken D_{F} einer bestimmten Anzahl N der zuletzt in die Fördertechnik 9 aufgegebenen Hängefördergüter 4.

Beispielsweise umfassen die historischen Daten derart geringe Dicken von Hängefördergütern, die eine Festlegung eines Transportabstands ermöglicht hätten, der kleiner ist als ein erforderlicher Mindesttransportabstand. Dadurch, dass der Mindesttransportabstand anlagentechnisch nicht unterschritten werden darf, sind diese sehr dünnen Hängefördergüter mit einem Transportabstand aufgegeben worden, der größer ist, als es notwendig gewesen wäre. Daraus ergibt sich eine vergleichsweise reduzierte Förderdichte, die bei der Festlegung des Transportabstands auf Basis aktueller Daten berücksichtigt werden kann. Die Berücksichtigung erfolgt insbesondere derart, dass ein Transportabstand d_{T} für ein aktuelles Hängefördergut 4 kleiner gewählt oder festgelegt werden kann, als dies gemäß einer für die Festlegung des Transportabstands verwendeten Zuordnungsvorschrift erforderlich wäre.

Aufgrund der Berücksichtigung der historischen Daten bei der Verarbeitung der aktuellen Daten können die Transportabstände gegebenenfalls kleiner festgelegt werden, als dies aufgrund der Festlegungsvorschrift notwendig wäre, da die zuvor in die Fördertechnik neuen aufgegebenen Fördergüter 4 mit einer geringen Förderdichte aufgegeben worden sind. Die Berücksichtigung der historischen Daten ist insbesondere so lange mögliche, wie ein durch die sehr dünnen Hängefördergüter 4 resultierender Überschuss an Lücken durch die dickeren Hängefördergüter 4 aufgebraucht ist. Durch die Kombination von historischen und aktuellen Daten bei der Festlegung des Transportabstands kann die Förderleistung zusätzlich erhöht werden. Auch bei der Kompensation des Überschusses an Lücken ist der anlagenbedingte Mindesttransportabstand einzuhalten.

Weiterhin ist es vorteilhaft, die historischen Daten der Dicken D_{F,i} weiter zu verarbeiten. Insbesondere können die historischen Daten der Dicken dazu verwendet werden, einen genauen Füllstand einer Abgabe- oder Speicherstrecke zu ermitteln und/oder zu berechnen. Insbesondere können Speichereinheiten für Hängefördergüter 4 effizienter befüllt werden, da eine pauschale Annahme einer durchschnittlichen Dicke für jedes Hängefördergut 4 entbehrlich ist.

Dadurch, dass der Transportabstand d_{T} individuell festgelegt wird, kann eine Auslegung einer Abgabestrecke der Fördertechnik 9 verbessert werden. Für die Auslegung kann der jeweils aktuelle, individuell festgelegte Transportabstand d_{T} verwendet werden. Eine Auslegung der Abgabestrecke auf Basis einer maximalen Dicke Hängefördergüter ist entbehrlich.

Dadurch können die Abgabestrecken effizienter, insbesondere mit einer höheren Warendichte, befüllt werden. Das Risiko einer Überfüllung einer Abgabestrecke ist verhindert. Der Flächenbedarf für die Abgabestrecke ist erhöht. Die Investitionskosten für eine derartige Hängeförderanlage sind reduziert.

Die in die Fördertechnik 9 aufgegebenen Hängefördergüter 4 werden dem Warenspeicher 10, der Sortiereinheit 11 und der Entladestation 12 zugeführt. Dort werden die Einzelwaren 2 von der Transporttasche 3 entleert, an Packstationen 14 zu Aufträgen 15 gepackt und vom Warenausgang 16 ausgeliefert. Die entleerten Transporttaschen 3 werden über die Rückführstrecke 3 der Beladestation 7 zurückgeführt. Es ist auch denkbar, dass die Fördertechnik 9 nicht dargestellte Verzweigungsstrecken aufweist, um die Hängefördergüter 4 an dem Warenspeicher 10 und/oder der Sortiereinheit 11 direkt vorbei zu fördern.

## Patentansprüche

1. Vorrichtung zum Aufgeben von Hängefördergut (4) in eine Hängeförderanlage (1) umfassend
a. eine Aufgabeeinheit (25) zum vereinzelten Aufgeben der Hängefördergüter (4) in eine Fördertechnik (9) der Hängeförderanlage (1) mit einem veränderlich festlegbaren Transportabstand (d_{T}), wobei die Aufgabeeinheit (25) ein Vereinzelungselement (20) zum Vereinzeln der Hängefördergüter (4) aufweist,
b. eine Erfassungseinheit (22) zum Erfassen der Dicke (D_{F}) der einzelnen Hängefördergüter (4),
**gekennzeichnet durch**
c. eine Auswerteeinheit (24) zum veränderlichen Festlegen des Transportabstandes (d_{T}) für das aufzugebende Hängefördergut (4) in Abhängigkeit der ermittelten Dicke (D_{F}).

2. Vorrichtung gemäß Anspruch 1, **dadurch gekennzeichnet, dass** die Erfassungseinheit (22) einen Sensor (23), insbesondere einen optischen Sensor, insbesondere ein Lichtgitter, aufweist.

3. Vorrichtung gemäß einem der vorstehenden Ansprüche, **dadurch gekennzeichnet, dass** der Transportabstand (d_{T}) stufenlos oder stufenweise veränderlich festlegbar ist.

4. Hängeförderanlage (1) umfassend
a. eine Vorrichtung (8) gemäß einem der vorstehenden Ansprüche,
b. eine mit der Vorrichtung (8) fördertechnisch verbundenen Fördertechnik (9) zum Mitnehmen der aufgegebenen Hängefördergüter (4).

5. Hängeförderanlage gemäß Anspruch 4, **dadurch gekennzeichnet, dass** die Fördertechnik (9) ein Fördermittel (27) und daran befestigte Mitnehmer (31) für die Hängefördergüter (4) aufweist, insbesondere für jeweils ein Hängefördergut (4) aufnehmende Hängeadapter (26).

6. Hängeförderanlage gemäß Anspruch 5, **dadurch gekennzeichnet, dass** die Mitnehmer (31) in einem regelmäßigen Mitnehmerabstand (d_{A}) entlang des Fördermittels (27) angeordnet sind.

7. Hängeförderanlage gemäß Anspruch 6, **dadurch gekennzeichnet, dass** der Mitnehmerabstand (d_{A}) kleiner ist als eine maximale Dicke (D_{F,max}) der Hängefördergüter (), wobei insbesondere gilt:
d_{A} < 0,5 · D_{F,max}, insbesondere dA < 0,2 · D_{F,max}, insbesondere d_{A} < 0,1 · D_{F,max} und insbesondere d_{A} < 0,05 · D_{F,max}.

8. Hängeförderanlage gemäß einem der Ansprüche 4 bis 7, **gekennzeichnet durch** einen Warenspeicher (10) zum Speichern der Hängefördergüter (4).

9. Hängeförderanlage gemäß einem der Ansprüche 5 bis 8, **gekennzeichnet durch** eine Sortiereinheit (11) zum Sortieren der Hängefördergüter (4).

10. Verfahren zum Aufgeben von Hängefördergut (4) in eine Hängeförderanlage (1) umfassend die Verfahrensschritte
- Fördern der Hängefördergüter (4) entlang einer Förderschiene zu einem Vereinzelungselement (20) einer Aufgabeeinheit (25),
- Stoppen der Hängefördergüter (4) mittels des Vereinzelungselements (20),
- Erfassen der Dicke (D_{F}) der einzelnen Hängefördergüter (4) mittels einer Erfassungseinheit (22),
- veränderliches Festlegen eines Transportabstandes (d_{T}) für das aufzugebende Hängefördergut (4) in Abhängigkeit der ermittelten Dicke (D_{F}) mittels einer Auswerteeinheit (24),
- vereinzeltes Aufgeben der Hängefördergüter (4) in eine Fördertechnik (9) der Hängeförderanlage (1) mit dem veränderlich festlegbaren Transportabstand (d_{T}).

11. Verfahren gemäß Anspruch 10, **dadurch gekennzeichnet, dass** das Aufgeben der Hängefördergüter (4) durch Freigeben eines ersten Stoppelements (20) erfolgt.

## Claims

1. Apparatus for feeding hanging conveyable articles (4) into a hanging conveying installation (1), comprising
a. a feeding unit (25) for the individualized feeding of the hanging conveyable articles (4) into a conveying system (9) of the hanging conveying installation (1) with a variably settable transport spacing (d_{T}), wherein the feeding unit (25) has an individualizing element (20) for individualizing the hanging conveyable articles (4),
b. a detection unit (22) for detecting the thickness (D_{F}) of the individual hanging conveyable articles (4),
**characterized by**
c. an evaluation unit (24) for variably setting the transport spacing (d_{T}) for the hanging conveyable article (4) to be fed in dependence on the determined thickness (D_{F}).

2. Apparatus according to claim 1, **characterized in that** the detection unit (22) comprises a sensor (23), in particular an optical sensor, in particular a light grid.

3. Apparatus according to one of the preceding claims, **characterized in that** the transport spacing (d_{T}) can be variably set in a stepless or stepwise manner.

4. Hanging conveying installation (1) comprising
a. an apparatus (8) according to one of the preceding claims,
b. a conveying system (9), which is conveyingly connected to the apparatus (8), for carrying along the fed hanging conveyable articles (4).

5. Hanging conveying installation according to claim 4, **characterized in that** the conveying system (9) has a conveying means (27) and drivers (31) fastened thereto for the hanging conveyable articles (4), in particular for hanging adapters (26) each receiving a hanging conveyable article (4).

6. Hanging conveying installation according to claim 5, **characterized in that** the drivers (31) are arranged at a regular driver spacing (d_{A}) along the conveying means (27).

7. Hanging conveying installation according to claim 6, **characterized in that** the driver spacing (d_{A}) is less than a maximum thickness (D_{F,max}) of the hanging conveyable articles (4), wherein the following holds in particular: dA < 0.5 . D_{F,max}, in particular dA < 0.2 . D_{F,max}, in particular dA < 0.1 · D_{F,max} and in particular dA < 0.05 · D_{F,max}.

8. Hanging conveying installation according to one of claims 4 to 7, **characterized by** an article store (10) for storing the hanging conveyable articles (4).

9. Hanging conveying installation according to one of claims 5 to 8, **characterized by** a sorting unit (11) for sorting the hanging conveyable articles (4).

10. Method for feeding hanging conveyable articles (4) into a hanging conveying installation (1), comprising the method steps of
- conveying the hanging conveyable articles (4) along a conveying rail to an individualizing element (20) of a feeding unit (25),
- stopping the hanging conveyable articles (4) by means of the individualizing element (20),
- detection of the thickness (D_{F}) of the individual hanging conveyable articles (4) by means of a detection unit (22),
- variable setting of a transport spacing (d_{T}) for the hanging conveyable articles (4) to be fed in dependence on the determined thickness (D_{F}) by means of an evaluation unit (24),
- individualized feeding of the hanging conveyable articles (4) into a conveying system (9) of the hanging conveying installation (1) with the variably settable transport spacing (d_{T}).

11. Method according to claim 10, **characterized in that** the feeding of the hanging conveyable articles (4) occurs by releasing a first stopping element (20).

## Revendications

1. Dispositif pour charger des marchandises transportées suspendues (4) dans une installation de transport suspendu (1) comprenant
a. une unité de chargement (25) pour le chargement individuel des marchandises transportées suspendues (4) dans une technique de transport (9) de l'installation de transport suspendu (1) avec une distance de transport (d_{T}) pouvant être fixée de manière variable, l'unité de chargement (25) présentant un élément d'individualisation (20) pour individualiser les marchandises transportées suspendues (4),
b. une unité de détection (22) pour détecter l'épaisseur (D_{F}) des différentes marchandises transportées suspendues (4),
**caractérisé par**
c. une unité d'évaluation (24) pour fixer de manière variable la distance de transport (d_{T}) pour les marchandises transportées suspendues (4) à charger, en fonction de l'épaisseur déterminée (D_{F}).

2. Dispositif selon la revendication 1, **caractérisé en ce que** l'unité de détection (22) comprend un capteur (23), en particulier un capteur optique, en particulier une barrière lumineuse.

3. Dispositif selon l'une quelconque des revendications précédentes, **caractérisé en ce que** la distance de transport (d_{T}) peut être fixée variablement de manière continue ou variable par étapes.

4. Installation de transport suspendu (1) comprenant
a. un dispositif (8) selon l'une quelconque des revendications précédentes,
b. une technique de transport (9) reliée au dispositif (8) de manière à pouvoir transporter et destinée à entraîner les marchandises transportées suspendues (4) chargées.

5. Installation de transport suspendu selon la revendication 4, **caractérisée en ce que** la technique de transport (9) présente un moyen de transport (27) et des entraîneurs (31) fixés à celui-ci pour les marchandises transportées suspendues (4), en particulier pour des adaptateurs de suspension (26) recevant chacun une marchandise transportée suspendue (4).

6. Installation de transport suspendu selon la revendication 5, **caractérisée en ce que** les entraîneurs (31) sont disposés à une distance d'entraînement régulière (d_{A}) le long du moyen de transport (27).

7. Installation de transport suspendu selon la revendication 6, **caractérisé en ce que** la distance d'entraînement (d_{A}) est inférieure à une épaisseur maximale (D_{F,max}) des marchandises transportées suspendues (4), où en particulier : d_{A} < 0,5 · D_{F,max}, en particulier d_{A} < 0,2 · D_{F,max}, en particulier d_{A} < 0,1 · D_{F,max} et en particulier d_{A} < 0,05 · D_{F,max}.

8. Installation de transport suspendu selon l'une quelconque des revendications 4 à 7, **caractérisée par** un magasin de stockage de marchandises (10) pour stocker les marchandises transportées suspendues (4).

9. Installation de transport suspendu selon l'une quelconque des revendications 5 à 8, **caractérisée par** une unité de tri (11) pour trier les marchandises transportées suspendues (4).

10. Procédé pour charger des marchandises transportées suspendues (4) dans une installation de transport suspendu (1), comprenant les étapes de procédé suivantes
- transporter les marchandises transportées suspendues (4) le long d'un rail de transport vers un élément d'individualisation (20) d'une unité de chargement (25),
- l'arrêt des marchandises transportées suspendues (4) au moyen de l'élément d'individualisation (20),
- détection de l'épaisseur (D_{F}) des différentes marchandises transportées suspendues (4) au moyen d'une unité de détection (22),
- fixation variable d'une distance de transport (d_{T}) pour les marchandises transportées suspendues (4) à charger, en fonction de l'épaisseur (D_{F}) déterminée, au moyen d'une unité d'évaluation (24),
- chargement individuel des marchandises transportées suspendues (4) dans une technique de transport (9) de l'installation de transport suspendu (1) avec la distance de transport (d_{T}) pouvant être fixée de manière variable.

11. Procédé selon la revendication 10, **caractérisé en ce que** le chargement des marchandises transportées suspendues (4) s'effectue en libérant un premier élément d'arrêt (20).
